(19) Europäisches Patentamt / European Patent Office / Office européen des brevets

(11) **EP 1 330 918 B1**

(12) **FASCICULE DE BREVET EUROPEEN**

(45) Date de publication et mention
de la délivrance du brevet:
**28.07.2010 Bulletin 2010/30**

(51) Int Cl.:
***H04N 3/15*** *(2006.01)*

(21) Numéro de dépôt: **01980623.1**

(22) Date de dépôt: **22.10.2001**

(86) Numéro de dépôt international:
**PCT/FR2001/003274**

(87) Numéro de publication internationale:
**WO 2002/035828 (02.05.2002 Gazette 2002/18)**

(54) **LECTEUR POUR ELEMENT DE DETECTION DE RAYONNEMENTS ELECTROMAGNETIQUES, CAPTEUR, ET PROCEDE DE LECTURE CORRESPONDANT**

LESEVORRICHTUNG FÜR ELEKTROMAGNETISCHE STRAHLUNGEN, SENSOR, UND ENTSPRECHENDES LESEVERFAHREN

READER FOR ELECTROMAGNETIC RADIATION SENSING ELEMENT, SENSOR AND CORRESPONDING READING METHOD

(84) Etats contractants désignés:
**DE GB IT**

(30) Priorité: **23.10.2000 FR 0013543**

(43) Date de publication de la demande:
**30.07.2003 Bulletin 2003/31**

(73) Titulaire: **Commissariat à l'Énergie Atomique et aux Énergies Alternatives 75015 Paris (FR)**

(72) Inventeur: **PANTIGNY, Philippe F-38640 CLAIX (FR)**

(74) Mandataire: **Simonnet, Christine et al Brevalex 3, rue du Docteur Lancereaux 75008 Paris (FR)**

(56) Documents cités:
• **LULE T ET AL: "100.000 PIXEL 120DB IMAGER IN TFA-TECHNOLOGY" 1999 SYMPOSIUM ON VLSI CIRCUITS. DIGEST OF TECHNICAL PAPERS. KYOTO, JUNE 17 - 19, 1999, SYMPOSIUM ON VLSI CIRCUITS, NEW YORK, NY: IEEE, US, vol. CONF. 13, 17 juin 1999 (1999-06-17), pages 133-136, XP000894786 ISBN: 0-7803-5441-9 cité dans la demande**

EP 1 330 918 B1

**Description**

Domaine technique

Le présent explosé a trait à une invention concernant un lecteur pour un élément de détection de rayonnements électromagnétiques et un capteur d'images comprenant un tel lecteur. L'invention concerne également un procédé de lecture susceptible d'être mis en oeuvre par ce lecteur.

On désigne par lecteur d'image un dispositif capable de transformer un signal électronique fourni par un ou plusieurs éléments de détection de rayonnements électromagnétiques, en un signal exploitable pour la représentation ou l'enregistrement d'une image ou tout au moins d'un élément d'image (pixel).

L'invention trouve des applications dans différents types de capteurs d'images tels que des caméras, par exemple. Ceux-ci peuvent être équipés d'éléments de détection sous la forme de diodes ou d'éléments à effet de champ (MOSFET). En particulier, l'invention peut être mise à profit pour des dispositifs équipés d'une rétine sensible intégrée à couches minces (TFA Thin Film on Asic).

L'invention trouve aussi des applications dans les domaines de l'instrumentation (spectroscopie, ...) ou dans la robotique (capteurs).

Etat de la technique

L'état de la technique le plus proche de l'invention est révélé dans le document (1) dont la référence complète est précisée à la fin de la présente description. Il est également illustré par la figure 1, tirée de ce document, et décrite ci-après pour la bonne intelligence de la suite de l'exposé (voir aussi le document (2)).

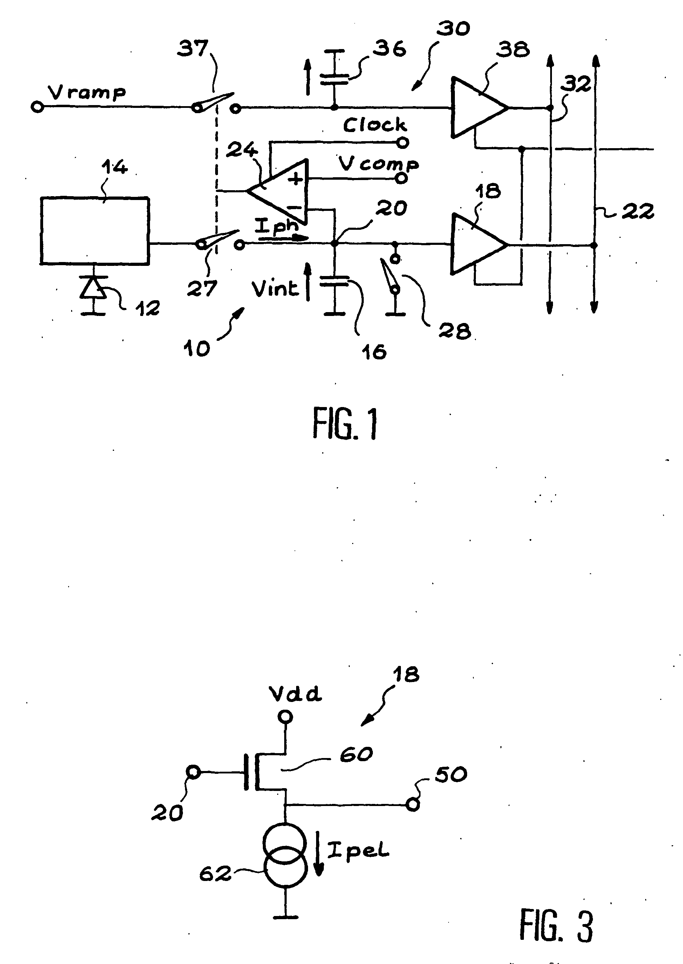

La figure 1 donne un schéma électrique d'un lecteur 10 associé à un élément de détection de rayonnement électromagnétique. L'élément de détection, représenté sous la forme d'une diode 12, est associé à un circuit d'adaptation d'impédance 14, ou étage d'entrée, destiné pour l'essentiel à polariser la diode et à recueillir les charges qui y sont générées par le rayonnement. L'élément de détection, en l'occurrence la diode 12, est en effet capable de convertir un rayonnement électromagnétique, par exemple une lumière visible ou infrarouge, ou un rayonnement y, en un courant de charges électriques. Le courant de charge noté $I_{ph}$ sur la figure est transmis par le circuit d'adaptation d'impédance 14 au lecteur 10 proprement dit. (Le lecteur 10 est en général appelé aussi préamplificateur-intégrateur).

Le lecteur 10 comprend des moyens d'intégration sous la forme d'un condensateur 16. Le condensateur est chargé lors d'une phase d'intégration par le courant électronique $I_{ph}$ et présente à ses bornes une tension notée $V_{int}$. La tension $V_{int}$ est représentative de l'intensité du flux de rayonnement reçu par l'élément de détection pendant la phase d'intégration.

Un amplificateur 18 connecté à une borne 20 du condensateur 16 permet de fournir un signal de détection qui varie linéairement avec la tension $V_{int}$. L'amplificateur relie en particulier la borne 20 du condensateur à un bus de signal de lecture 22. Le bus 22 est considéré comme constituant d'un étage de sortie du lecteur ou comme faisant partie d'un tel étage de sortie.

La borne 20 du condensateur 16 est également reliée à l'entrée inverseuse d'un comparateur 24. Le comparateur est prévu pour comparer la tension $V_{int}$ à une tension de consigne $V_{comp}$ et pour commander l'ouverture d'un interrupteur 27 lorsque la tension $V_{int}$ franchit le seuil de la tension de consigne $V_{comp}$. L'interrupteur 26, lorsqu'il est ouvert, permet d'isoler le lecteur 10 de l'élément de détection 12.

L'ouverture de l'interrupteur 27 permet ainsi d'interrompre l'intégration du courant dans le condensateur 16, et évite un phénomène de saturation du lecteur lorsque le flux de rayonnement reçu par l'élément de détection est très intense.

On peut observer que le comparateur 24 est cadencé par un signal d'horloge "Clock" de sorte que l'ouverture de l'interrupteur 26 doit de plus être validée par une impulsion de synchronisation.

Des impulsions de synchronisation sont également produites pour l'initialisation du lecteur avant chaque nouvelle phase d'intégration. Celles-ci commandant alors la fermeture temporaire d'un interrupteur 28 connecté entre les bornes du condensateur 16, pour provoquer sa décharge.

Selon une particularité intéressante du lecteur, celui-ci comprend en outre un étage d'indication temporelle 30 capable de délivrer un signal représentatif de la durée de chaque phase d'intégration. Ce signal est fourni pour l'essentiel par un second condensateur 36 relié à un bus de signal temporel 32 par l'intermédiaire d'un amplificateur 38. Le condensateur 36 est relié à une source de tension de charge $V_{ramp}$ par l'intermédiaire d'un interrupteur 37 dont l'ouverture est également pilotée par le comparateur 24.

En combinant la tension échantillonnée bloquée par l'étage d'indication temporelle 30 (temps d'intégration $T_{int}$) et la tension intégrée dans le condensateur 16 (photocharge intégrée $Q_{int}$), il est alors possible de retrouver la valeur

$$I_{ph} = \frac{Q_{int}}{T_{int}}$$ et par là, le flux incident.

Une description plus complète du fonctionnement du dispositif de la figure 1, bien qu'a priori superflue pour la compréhension de l'invention, peut être trouvée dans le document (1) déjà évoqué.

Un dispositif tel que décrit précédemment permet d'augmenter sensiblement la dynamique de prise d'image pour des capteurs d'images qui en sont équipés.

Exposé de l'invention.

L'invention a pour but de proposer un lecteur fonctionnant pour l'essentiel sur le principe du lecteur décrit ci-dessus, et qui présente des caractéristiques de fonctionnement améliorées.

Un but est, en particulier, de proposer un tel lecteur présentant un bruit de lecture réduit.

Un autre but est de proposer un tel lecteur présentant une sensibilité améliorée.

Un autre but encore, lié au précédent, est de proposer un tel lecteur pouvant fonctionner avec un condensateur d'intégration de faible capacité, et donc susceptible de réduire la surface du condensateur d'intégration.

L'invention a également pour but de proposer un procédé de lecture et un capteur, ou dispositif de détection, utilisant un ou plusieurs lecteurs conformes à l'invention.

Pour atteindre ces buts, l'invention concerne plus précisément un lecteur pour élément de détection de rayonnement électromagnétique comprenant :

- au moins un condensateur d'intégration de charges électriques, susceptible, d'être relié à au moins un élément de détection de rayonnement électromagnétique, pour délivrer une tension fonction de charges électriques fournies par ledit élément de détection,
- un amplificateur connecté entre le condensateur et un étage de sortie du lecteur, l'amplificateur présentant une borne de haute impédance reliée au condensateur d'intégration et une borne de basse impédance reliée à l'étage de sortie, et
- des moyens à comparateur pour isoler le condensateur d'intégration de l'élément de détection lorsque la tension aux bornes du condensateur est supérieure à une valeur de consigne.

Conformément à l'invention, les moyens à comparateur sont connectés à la borne de basse impédance de l'amplificateur.

Comme les moyens à comparateur sont connectés à la borne de basse impédance de l'amplificateur, c'est-à-dire à la borne reliée à l'étage de sortie, leur capacité d'entrée n'est pas en parallèle avec le condensateur d'intégration. Il en résulte une augmentation du facteur de conversion courant-tension, partant, une meilleure sensibilité.

La tension disponible à la sortie de l'amplificateur reflète la tension aux bornes du condensateur. Elle permet donc d'établir si celle-ci excède une certaine valeur.

Par ailleurs, un bruit d'entrée inhérent aux moyens à comparateur et à une source de tension de comparaison éventuellement appliquée à ces moyens, n'est pas amplifié par l'amplificateur. Ceci permet de réduire notablement le bruit ramené vers l'étage de sortie.

Selon un perfectionnement du lecteur, un interrupteur peut être connecté entre la borne de basse impédance de l'amplificateur et les moyens à comparateur, pour relier les moyens à comparateur à l'amplificateur lors d'une phase d'intégration et pour isoler les moyens à comparateur de l'amplificateur lors d'une phase de lecture.

Grâce à ce perfectionnement les moyens à comparateur peuvent être complètement isolés de l'amplificateur et de l'étage de sortie pour affranchir celui-ci du bruit susceptible d'être généré par ces moyens.

Selon un autre perfectionnement du lecteur, un interrupteur supplémentaire peut être connecté entre l'amplificateur et l'étage de sortie, pour connecter l'étage de sortie à l'amplificateur dans une phase de lecture et pour isoler l'étage de sortie de l'amplificateur dans une phase d'intégration.

Ce perfectionnement présente un certain nombre d'avantages.

Lors de la phase d'intégration, la sortie de basse impédance du lecteur est chargée uniquement par la capacité d'entrée du comparateur de faible capacité, ce qui donne un faible courant de polarisation du lecteur, d'où une faible consommation du dispositif. En revanche, lors de la phase de lecture, la sortie de basse impédance du lecteur est connectée à l'étage de sortie via un bus à forte capacité. Il en résulte un fort courant de polarisation pour charger l'étage de sortie, mais uniquement pendant un court instant.

Au total, on obtient une réduction de la consommation électrique.

Un lecteur conforme à l'invention peut éventuellement être commun à plusieurs éléments de détection de rayonnement. Toutefois il est préférable d'associer individuellement un lecteur à chaque élément de détection d'un capteur d'images. Une possibilité de forte intégration du lecteur, offerte par l'invention, permet d'associer les éléments de détection de rayonnement et les lecteurs. Ceux-ci sont associés dans une rétine dans laquelle chaque point élémentaire comprend un élément de détection et un lecteur.

Dans une réalisation particulière de l'amplificateur utilisé pour attaquer l'étage de sortie, celui-ci peut être construit autour d'un transistor à effet de champ polarisé en source suiveuse. Le transistor est polarisé par une source de courant de polarisation de faible intensité et peut être relié, par ailleurs, à un bus de lecture qui constitue l'étage de sortie ou tout au moins en fait partie. Dans ce cas, la source de courant de polarisation se trouve connectée en parallèle avec une éventuelle source de polarisation du bus de lecture.

L'invention concerne également un procédé de lecture d'un élément de détection, par exemple un élément de détection quantique ou thermique, au moyen d'un lecteur tel que décrit. Le procédé comprend une succession alternée de phases d'intégration et de phases de lecture. Lors des phases d'intégration, on relie les moyens à comparateur à l'amplificateur et lors des phases de lecture, on isole les moyens à comparateur.

Selon un autre aspect, on peut également, à titre complémentaire ou alternatif, relier l'amplificateur à l'étage de sortie lors des phases de lecture et l'isoler de l'étage de sortie lors des phases d'intégration.

D'autres caractéristiques et avantages de l'invention ressortiront de la description qui va suivre, en référence aux figures des dessins annexés. Cette description est donnée à titre purement illustratif et non limitatif.

Brève description des figures.

- La figure 1, déjà décrite, représente schématiquement un lecteur, associé à un élément de détection. Ce lecteur fait partie de l'état de la technique.
- La figure 2 représente schématiquement un pixel d'un capteur d'image, construit avec un lecteur conforme à l'invention.
- La figure 3, montre une réalisation particulière de moyens d'amplification d'un lecteur conforme à l'invention.

Description détaillée de modes de mise en oeuvre de l'invention.

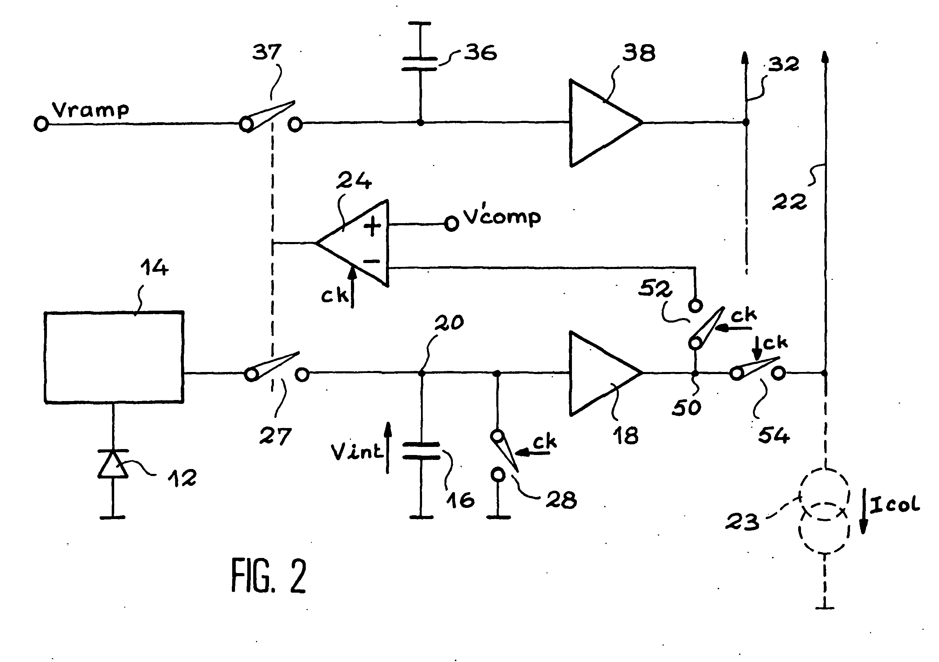

Un grand nombre d'éléments de la figure 2 sont identiques ou similaires à ceux de la figure 1, déjà décrite. Une description complète du circuit de la figure 2 et des composants qui le constituent n'est donc pas répétée ici. Pour faciliter le report aux explications déjà données dans la partie précédente du texte, les parties identiques ou similaires sont repérées avec les mêmes références.

On peut observer que le comparateur 24 évoqué précédemment, n'est plus connecté à la borne 20 du condensateur d'intégration 16, mais à une borne 50 de sortie de basse impédance de l'amplificateur 18.

Il convient de relever que la tension de comparaison $V'_{comp}$ appliquée au comparateur 24 est différente de la tension $V_{comp}$ appliquée au comparateur de la figure 1. En effet, la tension $V'_{comp}$ appliquée au comparateur 24 de la figure 2 doit tenir compte de la caractéristique de transfert de l'amplificateur 18.

L'amplificateur 18 remplit ici deux fonctions. Une première fonction est bien entendu celle de la modification du niveau de sortie du lecteur, caractérisée par le gain d'amplification. Une deuxième fonction est celle de l'adaptation d'impédance. Une borne d'entrée 20 de l'amplificateur 18 se trouve en effet à une impédance supérieure à celle d'une borne de sortie 50. Les bornes d'entrée et de sortie sont ainsi désignées respectivement par borne de haute et de basse impédance.

En reliant le comparateur 24 à une borne de basse impédance de l'amplificateur 18, il est possible de réduire les bruits de lecture de la tension $V_{int}$ du condensateur 16. De plus, on peut éviter une injection de charges en provenance de l'élément de détection 12, 14 dans une capacité d'entrée parasite du comparateur 24.

En plus des interrupteurs 27 et 37 déjà décrits en relation avec la figure 1, le lecteur de la figure 2 comprend deux interrupteurs supplémentaires 52 et 54.

Le premier interrupteur supplémentaire 52 est connecté entre le comparateur 24 et la borne 50 de basse impédance de l'amplificateur. L'interrupteur 52, lorsqu'il est ouvert, isole complètement le comparateur de l'amplificateur, mais aussi de l'étage de sortie. Dans l'exemple de la figure, l'étage de sortie est formé par le bus de signal de lecture 22. Cette mesure permet d'affranchir la lecture de tout bruit susceptible d'être généré par le comparateur.

Le deuxième interrupteur supplémentaire 54 est connecté entre la borne de basse impédance de l'amplificateur 18 et le bus de lecture 22. Son premier rôle est d'éviter un court-circuit entre toutes les bornes basse impédance des lecteurs connectés au même bus 22. Un deuxième rôle de cet interrupteur est lié à une réduction de la consommation en énergie du lecteur. I1 apparaîtra plus clairement dans la suite de la description.

Le fonctionnement du lecteur est cadencé par un circuit de synchronisation à horloge qui sur les figures n'est représenté que symboliquement par des flèches marquées ck. Le fonctionnement comprend essentiellement deux phases qui sont la phase d'intégration et la phase de lecture. Lors de la phase d'intégration le courant $I_{ph}$ vient charger

le condensateur 16, au moins jusqu'à l'ouverture des l'interrupteurs 27 et 37 précédemment décrits en référence à la figure 1. Dans la phase de lecture, la tension $V_{int}$, disponible aux bornes du condensateur, et amplifiée par l'amplificateur 18, est lue, c'est-à-dire transférée sur le bus de lecture 22. De même, la tension aux bornes du condensateur 36 est lue sur le bus de signal temporel 32. On peut distinguer éventuellement une phase supplémentaire d'initialisation lors de laquelle les charges accumulées dans les condensateurs 16 et 36 sont évacuées.

Le tableau I ci-après indique l'état de commutation des différents interrupteurs. Ceux-ci sont simplement repérés par leur référence correspondant aux figures.

TABLEAU I

| Interrupteur | Phase intégration | Phase lecture | Initialisation |
|---|---|---|---|
| Int. 52 | **fermé** | **ouvert** | indifférent |
| Int. 54 | **ouvert** | **fermé** | indifférent |
| Int. 28 | ouvert | ouvert | fermé |
| Int. 27 et 37 | fermés si $V_{int} < V_{comp}$ | ouverts | Indifférents |

Le fonctionnement de l'étage 30 d'indication temporelle est identique à celui de la figure 1. Un tel étage est connu du document (1), déjà évoqué, auquel on peut se reporter. On peut noter toutefois que le condensateur 36 de l'étage 30 est chargé par un générateur de rampes de tension, également pendant la phase d'intégration.

La figure 3, décrite ci-après montre une réalisation particulière de l'amplificateur 18 utilisé dans le lecteur de l'invention.

Conformément à la figure 3, l'amplificateur 18 comprend un transistor 60 dont le drain est relié à une tension d'alimentation notée Vdd, dont la grille est reliée à la borne 20 du condensateur d'intégration, et dont la source est polarisée par une source de courant 62. La source du transistor est également reliée à la borne 50 à laquelle sont connectés le comparateur 24 et l'étage de sortie 22.

La source de courant 62 délivre un courant de faible intensité, noté $I_{pel}$. Comme le second interrupteur supplémentaire 54 est ouvert pendant la phase d'intégration, afin de ne pas charger le bus de lecture 22, le transistor 60 n'est traversé que par le courant $I_{pel}$ de faible intensité. En revanche, lors de la phase de lecture, l'interrupteur 54 est fermé et la source de courant 62 se trouve en parallèle avec une source de polarisation du bus de lecture 22. Cette source indiquée en trait discontinu sur la figure 2, porte la référence 23. Elle délivre un courant $I_{col}$ dont l'intensité est très supérieure à $Ip_{el}$. Cette source permet d'attaquer le bus de lecture avec une sortance adaptée. On entend par "sortance" ("compliance" en anglais), la capacité à délivrer un courant apte à établir un signal en un temps donné sur une charge capacitive donnée.

Grâce à ces caractéristiques, la consommation des moyens d'amplification et donc du lecteur, peut être particulièrement réduite. Or une consommation réduite permet une meilleure intégration des composants.

Le lecteur de l'invention est adapté en particulier à des éléments de détection de type à jonction, de type MOS ou de type à transfert de charge (CCD).

*DOCUMENT*S *CITE*S

(1) 100 000 Pixel 120 dB Imager in TFA-Technology, T. Lulé, H. Keller, M. Wagner, M. Bôhm. 1999 Symposium on VLSI Circuits Digest of Technical Papers, pages 134 à 136.

(2) WO-A- 98/14002.

**Revendications**

1. Lecteur pour élément de détection de rayonnement électromagnétique comprenant

- au moins un condensateur (16) d'intégration de charges électriques, susceptible d'être relié à au moins un élément de détection (12, 14) de rayonnement électromagnétique, 1 pour délivrer une tension fonction de charges électriques fournies par ledit élément de détection,

- un amplificateur (18) présentant une borne de haute impédance (20) reliée au condensateur d'intégration (16) et une borne de basse impédance (50) reliée à un étage de sortie (22), et

- des moyens (24, 27) à comparateur, pour isoler le condensateur d'intégration (16) de l'élément de détection lorsque la tension à ladite borne de basse impédance (50) est supérieure à une valeur de consigne, les moyens à comparateur étant connectés à la borne de basse impédance (50) de l'amplificateur (18).

2. Lecteur pour élément de détection de rayonnement électromagnétique selon la revendication 1, comprenant un interrupteur (52) connecté entre la borne de basse impédance (20) de l'amplificateur (18) et les moyens à comparateur (24, 27) pour relier les moyens à comparateur à l'amplificateur (18) lors d'une phase d'intégration, et pour isoler les moyens à comparateur de l'amplificateur (18) lors d'une phase de lecture.

3. Lecteur pour élément de détection de rayonnement électromagnétique selon la revendication 1, comprenant un interrupteur (54) connecté entre l'amplificateur (18) et l'étage de sortie (22), pour connecter l'étage de sortie (22) à l'amplificateur (18) dans une phase de lecture et pour isoler l'étage de sortie (22) de l'amplificateur (18) dans une phase d'intégration.

4. Lecteur pour élément de détection de rayonnement électromagnétique selon la revendication 1 comprenant en outre des moyens (30) d'indication d'une durée d'intégration de charges par le condensateur d'intégration.

5. Lecteur pour élément de détection selon la revendication 1, dans lequel l'amplificateur (18) comporte un transistor à effet de champ (60) polarisé en source suiveuse par une source de courant (62).

6. Lecteur d'élément de détection selon la revendication 5, dans lequel la source de courant (62) de polarisation du transistor (60) présente un intensité ($I_{pel}$) faible par comparaison avec une source de courant (23) de polarisation d'un bus de lecture de l'étage de sortie (22).

7. Capteur comprenant une pluralité d'éléments de détection de rayonnement électromagnétique et au moins un lecteur conforme à la revendication 1.

8. Capteur selon la revendication 7, dans lequel un lecteur est connecté respectivement à chaque élément de détection de rayonnement électromagnétique.

9. Capteur selon la revendication 7, dans lequel les éléments (12) de détection de rayonnement électromagnétique sont choisis parmi des détecteurs quantiques ou thermiques.

10. Procédé de lecture d'un élément de détection de rayonnement électromagnétique au moyen d'un lecteur conforme à la revendication 1, comprenant une succession alternée de phases d'intégration et de phases de lecture, dans lequel on relie les moyens à comparateur à l'amplificateur lors des phases d'intégration et dans lequel on isole les moyens à comparateur de l'amplificateur lors des phases de lecture.

11. Procédé de lecture d'un élément de détection de rayonnement électromagnétique, au moyen d'un lecteur conforme à la revendication 1, comprenant une succession alternée de phases d'intégration et de phases de lecture, dans lequel on relie l'amplificateur (18) à l'étage de sortie (22) lors des phases de lecture et dans lequel on isole l'amplificateur (18) de l'étage de sortie (22) des moyens de lecture lors des phases d'intégration.

**Claims**

1. Reader for an electromagnetic radiation detection element comprising:

- at least one integration capacitor (16) to integrate electrical charges that can be connected to at least one electromagnetic radiation detection element (12, 14) to output a voltage that is a function of the electrical charges output by the said detection element,

- an amplifier (18) with a high impedance terminal (20) connected to an integration capacitor (16) and a low impedance terminal (50) connected to an output stage (22), and

- comparator means (24, 27), to isolate the integration capacitor (16) from the detection element when the voltage at the capacitor terminals is greater than a set value,

the comparator means being connected to the low impedance terminal (50) of the amplifier (18).

2. Reader for an electromagnetic radiation detection element according to claim 1, comprising a switch (52) connected between the low impedance terminal (20) of the amplifier (18) and the comparator means (24, 27) to connect the comparator means to the amplifier (18) during an integration phase, and to isolate the comparator means from the amplifier (18) during a read phase.

3. Reader for an electromagnetic radiation detection element according to claim 1, comprising a switch (54) connected between the amplifier (18) and the output stage (22), to connect the output stage (22) to the amplifier (18) in a read phase and to isolate the output stage (22) from the amplifier (18) in an integration phase.

4. Reader for an electromagnetic radiation detection element according to claim 1 also comprising means (30) of vindicating a duration of charge integration by the integration capacitor.

5. Reader for a detection element according to claim 1, in which the amplifier (18) comprises a field effect transistor (60) polarized into a follower source by a current source (62).

6. Reader of a detection element according to claim 5, in which the polarization current source (62) of the transistor (60) has a low intensity ($I_{pel}$) compared with a polarization current source (23) of an output stage read bus (22).

7. Sensor comprising several electromagnetic radiation detection elements and at least one reader according to claim 1.

8. Sensor according to claim 7, in which a reader is connected to each electromagnetic radiation detection element.

9. Sensor according to claim 7, in which the electromagnetic radiation detection elements (12) are chosen form among quantic and thermal detectors.

10. Read process for an electromagnetic radiation detection element using a reader conform with claim 1, comprising an alternating succession of integration phases and read phases, in which the comparator means are connected to the amplifier during the integration phases and in which the comparator means are isolated from the amplifier during the read phases.

11. Process for reading an electromagnetic radiation detection element using a reader according to claim 1, comprising an alternating succession of integration phases and read phases, in which the amplifier (18) is connected to the output stage (22) during read phases and in which the amplifier (18) is isolated from the output stage (22) from the read means during the integration phases.

**Patentansprüche**

1. Lesevorrichtung für ein Detektionselement von elektromagnetischer Strahlung, umfassend:

   - mindestens einen Kondensator (16) zur Integration von elektrischen Ladungen, der mit wenigstens einem Detektionselement (12, 14) von elektromagnetischer Strahlung verbunden ist, um eine Spannung zu liefern, die abhängig ist von den durch das genannte Detektionselement gelieferten elektrischen Ladungen,
   - einen Verstärker (18) mit einem Hochimpedanz-Anschluss (20), verbunden mit dem Integrationskondensator (16), und einem Niedrigimpedanz-Anschluss (50), verbunden mit einer Ausgangsstufe (22), und
   - Vergleichseinrichtungen (24, 27), um den Integrationskondensator (16) von dem Detektionselement zu isolieren, wenn die Spannung an den Anschlüsse des Kondensators höher ist als ein Sollwert,

   die Vergleichseinrichtungen mit dem Niedrigimpedanz-Anschluss (50) des Verstärkers (18) verbunden sind.

2. Lesevorrichtung für ein Detektionselement von elektromagnetischer Strahlung nach Anspruch 1, mit einem Schalter (52) zwischen dem Niedrigimpedanz-Anschluss (20) des Verstärkers (18) und den Vergleichseinrichtungen (24, 27), um während einer Integrationsphase die Vergleichseinrichtungen mit dem Verstärker (18) zu verbinden und während einer Lesephase die Vergleichseinrichtungen von dem Verstärker (18) zu trennen.

3. Lesevorrichtung für ein Detektionselement von elektromagnetischer Strahlung nach Anspruch 1, mit einem Schalter (54) zwischen dem Verstärker (18) und der Ausgangsstufe (22), um während einer Lesephase die Ausgangsstufe (22) mit dem Verstärker (18) zu verbinden und während einer Integrationsphase die Ausgangsstufe (22) von dem Verstärker (18) zu trennen.

4. Lesevorrichtung für ein Detektionselement von elektromagnetischer Strahlung nach Anspruch 1, mit außerdem Angabeeinrichtungen (30) einer Integrationsdauer von Ladungen durch den Integrationskondensator.

5. Lesevorrichtung für ein Detektionselement von elektromagnetischer Strahlung nach Anspruch 1, bei der der Verstärker (18) einen mittels einer Stromquelle (62) als Sourcefolger geschalteten Feldeffekttransistor (60) umfasst.

6. Lesevorrichtung für ein nach Anspruch 5, bei der die Stromquelle (62) zur Polung des Transistors (60) eine niedrige Stärke ($I_{pel}$) aufweist, verglichen mit einer Stromquelle (23) zur Polung eines Lesebusses der Ausgangsstufe (22).

7. Sensor mit einer Vielzahl von Detektionselementen von elektromagnetischer Strahlung und mindestens einer Lesevorrichtung nach Anspruch 1.

8. Sensor nach Anspruch 7, bei dem mit jedem Detektionselement von elektromagnetischer Straffung jeweils eine Lesevorrichtung verbunden ist.

9. Sensor nach Anspruch 7, bei dem die Detektionselemente von elektromagnetischer Strahlung (12) ausgewählt werden unter Quantendetektoren oder Wärmedetektoren.

10. Verfahren zum Lesen eines Detektionselements von elektromagnetischer Strahlung mittels einer Lesevorrichtung nach Anspruch 1, umfassend eine Wechselfolge von Integrationsphasen und Lesephasen, bei der man während den Integrationsphasen die Vergleichseinrichtungen mit dem Verstärker verbindet und während den Lesephase die Vergleichseinrichtungen von dem Verstärker trennt.

11. Verfahren zum Lesen eines Detektionselements von elektromagnetischer Strahlung mittels einer Lesevorrichtung nach Anspruch 1, umfassend eine Wechselfolge von integrationsphasen und Lesephasen, bei dem man während den Lesephasen die Ausgangsstufe (22) mit dem Verstärker (18) verbindet und während den Integrationsphasen die Ausgangsstufe (22) von dem Verstärker (18) trennt.

FIG. 1

FIG. 3

FIG. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9814002 A

**Littérature non-brevet citée dans la description**

- **T. Lulé ; H. Keller ; M. Wagner ; M. Bôhm.** *Symposium on VLSI Circuits Digest of Technical Papers,* 1999, 134-136